# FASCICULE DE BREVET EUROPEEN

(11) **EP 3 197 613 B1**
(45) Date de publication et mention de la délivrance du brevet: **07.11.2018**
(21) Numéro de dépôt: 15742283.3
(22) Date de dépôt: 28.07.2015
(51) Int. Cl.: B08B 17/02, B08B 5/00

(54) **DISPOSITIF DE PROTECTION D'UN CAPTEUR OPTIQUE**
VORRICHTUNG ZUM SCHUTZ EINES OPTISCHEN SENSORS
DEVICE FOR PROTECTION OF AN OPTICAL SENSOR

(30) Priorité: 23.09.2014 FR 1458968
(43) Date de publication de la demande: 02.08.2017
(73) Titulaire: Valeo Systèmes d'Essuyage, 78322 Le Mesnil Saint Denis (FR)
(72) Inventeur: GIRAUD, Frédéric, F-78610 Le Perray en Yvelines (FR); TREBOUET, Marcel, F-78450 Chavenay (FR)
(74) Mandataire: Callu-Danseux, Violaine
(86) Numéro de dépôt international: PCT/EP2015/067256
(87) Numéro de publication internationale: WO 2016/045828

(56) Documents cités:
- WO-A1-03/104052
- JP-A- 2012 201 122
- US-A1- 2011 005 030

## Description

La présente invention se rapporte à un dispositif de protection d'un capteur optique.

De nos jours, des caméras de vision arrière équipent un grand nombre des véhicules automobiles, et elles font en particulier partie d'un système d'aide au parking qui permet de se garer plus facilement dans un emplacement sans se retourner et de détecter les obstacles situés derrière le véhicule.

On connaît des caméras qui sont installées à l'intérieur de l'habitacle contre la lunette / vitre arrière en visant vers l'arrière depuis la lunette arrière du véhicule. Ces caméras sont bien protégées des influences climatiques extérieures et peuvent par exemple bénéficier des systèmes de dégivrage et de nettoyage de la lunette arrière, par exemple d'un fil chauffant intégré dans la vitre de la lunette arrière.

Cependant, l'angle de vue n'est pas optimal, notamment pour une aide au parking et pour cette raison, on préfère que la caméra soit agencée au niveau du pare-chocs arrière ou au niveau de la plaque d'immatriculation arrière du véhicule.

Dans ce cas, la caméra est donc fortement exposée aux projections de saletés qui peuvent se déposer sur son optique et ainsi réduire son efficacité, voire la rendre inopérante.

En particulier par temps de pluie, on constate des projections de pluie et de saletés qui peuvent grandement affecter l'opérabilité du système de vision.

Pour contrer le dépôt de saletés sur la caméra, il est connu d'agencer un dispositif de nettoyage de l'optique de la caméra, généralement un gicleur de liquide de nettoyage, à proximité de celle-ci, pour supprimer les éléments polluants qui se sont déposés au cours du temps.

Cependant, l'optique de la caméra, qui est un élément relativement fragile, n'est pas protégée de projections pouvant l'endommager.

Il est aussi connu de monter la caméra à l'intérieur de l'habillage externe du véhicule, et de la protéger des agressions extérieures par l'intermédiaire d'une vitre de protection fixée à l'habillage.

Bien que la caméra soit protégée des agressions extérieures, la caméra reste soumise au dépôt de polluants se trouvant à l'intérieur de l'habillage du véhicule, et le nettoyage de la caméra est particulièrement difficile dans un tel aménagement.

On connaît du document WO2005039934 au nom de la demanderesse un montage d'une caméra de vision arrière dans un boîtier de protection comportant une fenêtre de vision. Ce montage comporte en outre un dispositif de projection d'un liquide de nettoyage sur la vitre de vision. Ainsi, la caméra est bien protégée tout en permettant d'assurer une vision optimale après un nettoyage.

Cependant, ce montage s'avère trop encombrant et les caméras disponibles actuellement sur le marché sont étanches de sorte que l'on préfère les monter directement sur un élément de carrosserie au niveau du pare-chocs ou de la plaque d'immatriculation.

Un nouveau concept apparu depuis ne tend pas à nettoyer la caméra dès qu'elle est sale pour maintenir son opérabilité, mais de la garder propre en permanence contre les projections de pluie ou de poussière. A cet effet, il est connu de projeter en permanence un rideau d'air devant la caméra faisant écran qui empêche le dépôt de saletés.

Toutefois, pour permettre une vision très large de la caméra arrière, celle-ci est équipée d'une optique à angle large avec une lentille convexe très bombée également connue sous le nom oeil de poisson ou « fish-eye » en anglais. La distorsion de l'image est ensuite réalisée sous forme informatique de sorte que l'utilisateur peut voir sur un écran une image aplanie. Cette optique bombée oeil de poisson a pour conséquence, lorsqu'elle est balayée par un rideau d'air sensiblement perpendiculairement à l'axe optique, que la partie proximale à la buse de projection d'air est bien nettoyé, mais la partie distale, bien que protégée par le rideau d'air, forme une zone qui est difficile à sécher ou à dégivrer par le rideau d'air.

Pour remédier à ce problème, on connaît du document JP 2012-201122 une caméra qui présente une buse pour projeter de l'air comprimé sur la surface de lentille à partir d'une partie de la circonférence extérieure de la lentille convexe.

En outre, le boîtier de la caméra possède un passage d'écoulement ramifié prévue à une position en-dessous de la lentille convexe, dans le sens aval de l'air comprimé qui permet de ramener une petite partie du rideau d'air projeté vers la partie distale de la lentille.

Cependant, au vu de la taille de ce passage et de la perte de charge qu'il constitue, cette disposition s'avère peu efficace, en particulier lorsque le véhicule roule par exemple à 90km/h et que le rideau d'air est attiré par des phénomènes aérodynamiques autour du véhicule vers l'arrière de celui-ci.

Une autre solution qui semble plus efficace est connue du document WO03104052, qui est considéré comme l'état de la technique le plus proche et décrit un dispositif selon le préambule de la revendication 1, notamment celle illustrée à la figure 3 de ce document. Dans ce cas, une pompe d'air comprimé est installée à proximité de la caméra. Une sortie de cette pompe est reliée à une buse de projection d'un jet d'air sur un côté de la lentille de la caméra et une conduite d'aspiration qui est reliée via un filtre de protection de la pompe est placée sur le côté de la lentille de la caméra opposé à la buse de projection.

Ce montage est complexe et onéreux. En effet, il nécessite l'installation d'un filtre dans la conduite d'aspiration pour pourvoir protéger la pompe, filtre qui doit être changé à des intervalles réguliers pour maintenir l'opérabilité du dispositif. En effet, une fois le filtre bouché, la pompe tourne à vide et le flux d'air projeté est réduit, voire nulle.

De plus, du fait que la pompe doit être reliée aussi bien à la buse de projection qu'à la conduite d'aspiration, on doit installer la pompe et le filtre à proximité de la caméra ce qui est généralement difficile étant donné du peu de place dont on dispose au niveau du pare-chocs ou au niveau de la plaque d'immatriculation.

Enfin, par temps de pluie, l'air recirculé en boucle fermé est très humide et de la buée risque de se déposer sur l'optique de la caméra. Aucun séchage ne peut être réalisé. Ceci ne peut être contré en disposant un déshumidificateur couteux dans les conduites d'aspiration ou de refoulement.

La présente invention se propose de remédier au moins partiellement aux inconvénients ci-dessus mentionnés en présentant un dispositif de protection d'un capteur optique qui soit facile à installer, peu onéreux, et dont la maintenance peut être réduite.

A cet effet, l'invention a pour objet un dispositif de protection d'un capteur optique comprenant:
- au moins une buse de projection d'air devant le capteur optique, la buse de projection étant disposée sur un côté du capteur optique et reliée à une pompe de refoulement d'air via une conduite de refoulement de sorte que l'air projeté par la buse de projection d'air affleure le capteur optique,
- au moins une conduite d'aspiration disposée sur le côté opposé de la buse de projection par rapport au capteur optique,
caractérisé en ce que la conduite d'aspiration est reliée à la conduite de refoulement de la pompe, en aval de la pompe de sorte que l'aspiration dans la conduite d'aspiration est réalisée par un effet venturi.

Ainsi, le rideau d'air est conduit de façon efficace autour du capteur optique protégeant celui-ci. La pompe peut être installée même loin de la caméra étant donné que la conduite d'aspiration travaille sur le principe d'un effet venturi. Aucune maintenance ne doit être prévue pour ce conduit d'aspiration, en particulier, il n'est pas nécessaire d'y installer un filtre. De plus, le dispositif selon l'invention est moins cher que les solutions de l'état de la technique.

Le dispositif de protection selon l'invention peut comporter en outre une ou plusieurs des caractéristiques suivantes prises seules ou en combinaison :
La conduite d'aspiration peut être raccordée à la conduite de refoulement de sorte que la direction du flux dans la conduite de refoulement et la direction du flux dans la conduite d'aspiration font un angle inférieur ou égal à 90°.

Selon un aspect, le dispositif comprend un éjecteur à effet venturi au niveau du raccordement de la conduite d'aspiration à la conduite de refoulement.

L'éjecteur à effet venturi présente par exemple un étranglement de diamètre inférieur au diamètre de la conduite de refoulement.

Le diamètre de l'étrangement peut être compris entre 0.1 et 0.9 fois le diamètre de la conduite de refoulement.

Selon encore un autre aspect, le diamètre de la conduite d'aspiration est inférieur au diamètre de la conduite de refoulement et le diamètre de la conduite d'aspiration est notamment compris entre 0.1 et 0.9 fois le diamètre de la conduite de refoulement.

On prévoit que le dispositif peut comprendre un élément chauffant disposé entre la pompe et le raccordement entre la conduite de refoulement et la conduite d'aspiration.

Le flux d'air en sortie de la buse de projection est par exemple un flux d'air laminaire.

Selon encore un autre aspect, la pompe de refoulement d'air comporte une prise d'air à l'intérieur de l'habitacle d'un véhicule automobile.

La conduite d'aspiration peut comprendre une ouverture en partie basse afin d'évacuer principalement les résidus d'eau pouvant stagner.

L'invention concerne également un système de vision arrière pour véhicule automobile comprenant un capteur optique et un dispositif tel que défini ci-dessus.

D'autres avantages et caractéristiques apparaîtront à la lecture de la description de l'invention, ainsi que des dessins annexés sur lesquels :
- la figure 1 est une vue schématique d'un premier mode de réalisation du dispositif selon l'invention,
- la figure 2 est une vue schématique d'un second mode de réalisation du dispositif selon l'invention
- la figure 3 est une vue schématique d'un troisième mode de réalisation du dispositif selon l'invention.

Sur ces figures, les éléments identiques portent les mêmes numéros de référence.

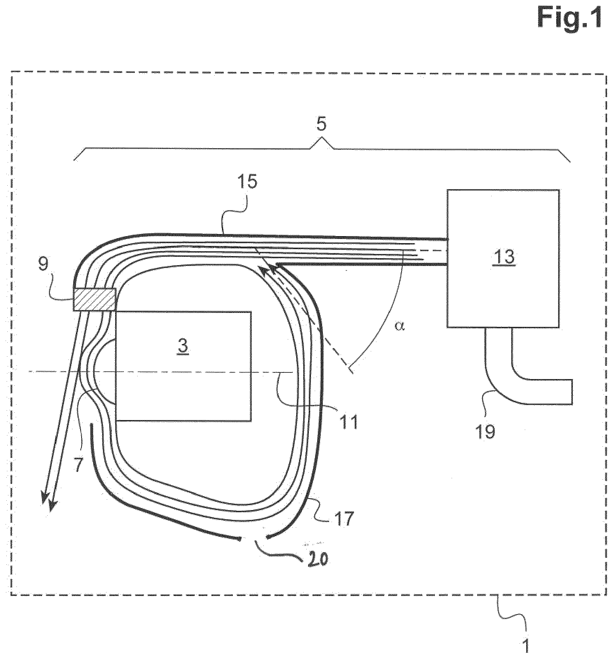

La figure 1 montre un système 1 de vision arrière pour véhicule automobile comprenant un capteur optique 3 et un dispositif de protection 5 de ce capteur 3.

Le capteur optique 3 est par exemple une caméra destinée à être montée à l'arrière d'un véhicule automobile, par exemple au niveau d'un pare-chocs ou d'une plaque d'immatriculation (non représentés).

Le capteur optique 3 comporte par exemple une optique 7 convexe (bombée) tel qu'une optique oeil de poisson (« fish-eye » en anglais).

Comme on le voit sur la figure 1, le dispositif de protection 5 comprend au moins une buse de projection d'air 9 disposé devant le capteur optique 3.

Sur la figure 1, le flux d'air est dirigé selon une direction sensiblement perpendiculaire par rapport à l'axe optique 11 du capteur optique 3. Dans le présent exemple, le flux d'air est dirigé du haut vers le bas en direction du sol (non représenté), mais selon une variante, un flux d'air dirigé de droite à gauche ou vice versa est également possible.

La buse de projection 9 est donc disposée sur un côté du capteur optique 3 de sorte que l'air projeté affleure le capteur optique 3, en particulier son optique convexe 7.

La buse de projection 9 est alimentée en air par une pompe de refoulement d'air 13 et est reliée à une sortie d'air de celle-ci par l'intermédiaire d'une conduite de refoulement 15.

La pompe de refoulement 13 est par exemple réalisée sous forme d'un pulseur d'air, notamment à rouleau ou à hélice, ou un compresseur. Dans le cadre d'un véhicule poids lourds, la pompe peut être le compresseur d'air comprimé du véhicule pour le système de freinage avec son réservoir d'air comprimé.

Le dispositif de protection 5 comprend de plus au moins une conduite d'aspiration 17 qui est disposée sur le côté opposé de la buse de projection 9 par rapport au capteur optique 3.

Comme on le voit sur la figure, la conduite d'aspiration 17 est reliée à la conduite de refoulement 15 de la pompe 13, en aval de celle-ci de sorte que l'aspiration dans la conduite d'aspiration 17 est réalisée par un effet venturi.

On constate donc qu'une partie de l'air qui a été projeté par la buse 9 est aspirée par la conduite d'aspiration 17 de façon qu'une sorte d'écran de protection soit formé par le flux d'air autour de l'optique convexe 7 du capteur 3.

Par le fait que l'aspiration dans la conduite 17 est réalisée par un effet venturi, cette conduite 17 peut être assez courte et être raccordée à la conduite de refoulement 15 à proximité du capteur optique 3.

Comme la conduite 17 fonctionne sur la base de l'effet venturi, aucune maintenance particulière n'est nécessaire et la pompe de refoulement 13 peut être disposée plus loin, par exemple à l'intérieur de l'habitacle. A cet effet, la pompe de refoulement d'air comporte une prise d'air 19 à l'intérieur de l'habitacle d'un véhicule automobile. Ainsi, l'air soufflé en direction du capteur optique est déjà filtré et conditionnée notamment en température et taux d'humidité par le système de climatisation du véhicule.

Pour former une sorte de rideau d'air faisant écran contre les saletés, le flux d'air en sortie de la buse de projection 9 est un flux d'air laminaire.

Concernant le raccordement du conduit d'aspiration 17 au conduit de refoulement 15, la direction du flux dans la conduite de refoulement 15 et la direction du flux dans la conduite d'aspiration 17 font un angle α inférieur ou égale à 90°.

Par ailleurs, le diamètre de la conduite d'aspiration 17 est inférieur au diamètre de la conduite de refoulement15, en particulier le diamètre de la conduite d'aspiration 17 est compris entre 0.1 et 0.9 fois le diamètre de la conduite de refoulement 15.

Comme visible sur la figure 1, la conduite d'aspiration 17 présente une ouverture 20 disposée de préférence en partie basse de la conduite d'aspiration. Cette ouverture 20 a pour but d'empêcher l'eau ou les saletés de stagner dans la conduite d'aspiration 17 et par conséquent l'obstruer.

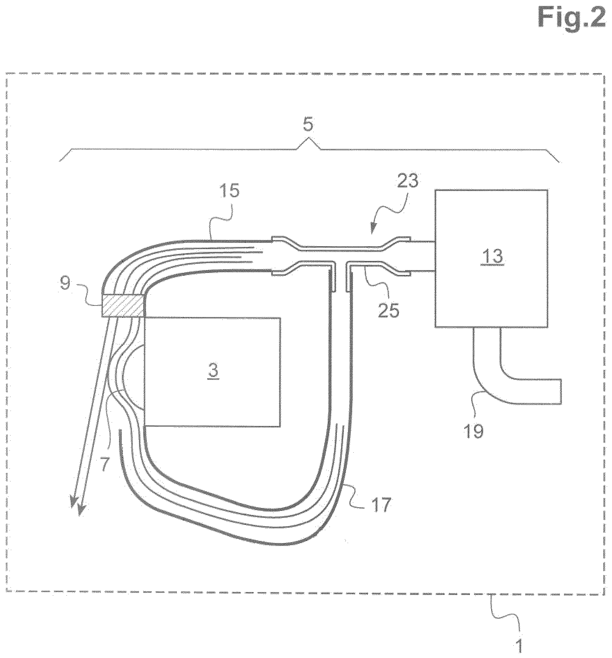

La figure 2 montre un autre mode de réalisation qui se distingue de celui de la figure 1 par le fait que le dispositif comprend un éjecteur à effet venturi 23 au niveau du raccordement de la conduite d'aspiration 17 à la conduite de refoulement 15.

L'éjecteur à effet venturi 23 présente un étranglement 25 de diamètre inférieur au diamètre de la conduite de refoulement 15 par exemple compris entre 0.1 et 0.9 fois le diamètre de la conduite de refoulement 15.

Ceci a pour effet de renforcer l'aspiration et rend le dispositif plus efficace.

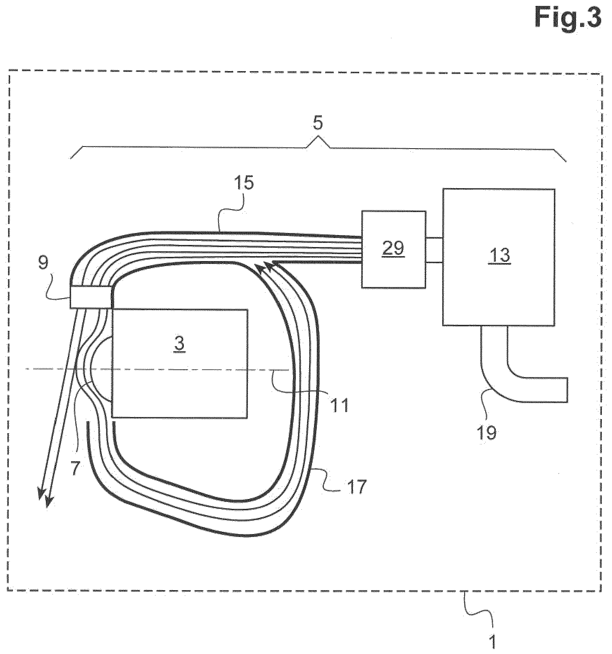

La figure 3 montre encore un autre mode de réalisation qui se distingue de celui de la figure 1 par le fait que le dispositif comprend un élément chauffant 29 disposé entre la pompe 13 et le raccordement entre la conduite de refoulement 15 et la conduite d'aspiration 17. L'élément chauffant 29 peut être par exemple une résistance chauffante électrique, ou un composant PTC (par exemple en céramique ou plastique).

Ce mode de réalisation est particulièrement intéressant pour réaliser un dégivrage ou un séchage rapide de l'optique convexe 7 du capteur 3.

On comprend donc que le dispositif de protection 5 selon l'invention permet de réaliser avec simplicité un écran d'air de protection efficace autour du capteur optique 3.

Bien sûr, d'autre variantes sont possibles sont sortir du cadre de la présente invention. Ainsi, on peut par exemple combiner les modes de réalisation de la figure 2 et de la figure 3.

## Revendications

1. Dispositif de protection (5) d'un capteur optique (3) comprenant:
- au moins une buse (9) de projection d'air devant le capteur optique (3), la buse (9) de projection étant disposée sur un côté du capteur optique (3) et reliée à une pompe de refoulement d'air (13) via une conduite de refoulement (15) de sorte que l'air projeté par la buse (9) de projection d'air affleure le capteur optique (3),
- au moins une conduite d'aspiration (17) disposée sur le côté opposé de la buse de projection (9) par rapport au capteur optique (3),
**caractérisé en ce que** la conduite d'aspiration (17) est reliée à la conduite de refoulement (15) de la pompe (13), en aval de la pompe (13) de sorte que l'aspiration dans la conduite d'aspiration (17) est réalisée par un effet venturi.

2. Dispositif selon la revendication 1, **caractérisé en ce que** la conduite d'aspiration (17) est raccordée à la conduite de refoulement (15) de sorte que la direction du flux dans la conduite de refoulement (15) et la direction du flux dans la conduite d'aspiration (17) font un angle inférieur ou égal à 90°.

3. Dispositif selon la revendication 1 ou 2, **caractérisé en ce qu'**il comprend un éjecteur à effet venturi (23) au niveau du raccordement de la conduite d'aspiration (17) à la conduite de refoulement (15).

4. Dispositif selon la revendication 3, **caractérisé en ce que** l'éjecteur à effet venturi (23) présente un étranglement (25) de diamètre inférieur au diamètre de la conduite de refoulement (15).

5. Dispositif selon la revendication 4, **caractérisé en ce que** le diamètre de l'étrangement (25) est compris entre 0.1 et 0.9 fois le diamètre de la conduite de refoulement (15).

6. Dispositif selon l'une quelconque des revendications 1 à 5, **caractérisé en ce que** le diamètre de la conduite d'aspiration (17) est inférieur au diamètre de la conduite de refoulement (15).

7. Dispositif selon la revendication 6, **caractérisé en ce que** le diamètre de la conduite d'aspiration (17) est compris entre 0.1 et 0.9 fois le diamètre de la conduite de refoulement (15).

8. Dispositif selon l'une quelconque des revendications 1 à 5, **caractérisé en ce qu'**il comprend un élément chauffant (29) disposé entre la pompe (13) et le raccordement entre la conduite de refoulement (15) et la conduite d'aspiration (17).

9. Dispositif selon l'une quelconque des revendications précédentes, **caractérisé en ce que** la conduite d'aspiration (17) comprend une ouverture (20) en partie basse.

10. Dispositif selon l'une quelconque des revendications 1 à 9, **caractérisé en ce que** le flux d'air en sortie de la buse de projection (9) est un flux d'air laminaire.

11. Dispositif selon l'une quelconque des revendications 1 à 10, **caractérisé en ce que** la pompe de refoulement d'air (13) comporte une prise d'air (19) à l'intérieur de l'habitacle d'un véhicule automobile.

12. Système de vision arrière (1) pour véhicule automobile comprenant un capteur optique (3) et un dispositif (5) selon l'une quelconque des revendications 1 à 11.

## Patentansprüche

1. Vorrichtung zum Schutz (5) eines optischen Sensors (3), welche umfasst:
- wenigstens eine Düse zum Blasen von Luft vor den optischen Sensor (3), wobei die Blasdüse (9) auf einer Seite des optischen Sensors (3) angeordnet ist und mit einer Luftförderpumpe (13) über eine Förderleitung (15) verbunden ist, derart, dass die von der Luftblasdüse (9) ausgeblasene Luft nahe an dem optischen Sensor (3) vorbeiströmt,
- wenigstens eine Saugleitung (17), die auf der der Blasdüse (9) bezüglich des optischen Sensors (3) gegenüberliegenden Seite angeordnet ist,
**dadurch gekennzeichnet, dass** die Saugleitung (17) mit der Förderleitung (15) der Pumpe (13) stromabwärts der Pumpe (13) verbunden ist, derart, dass der Sog in der Saugleitung (17) durch einen Venturi-Effekt erzeugt wird.

2. Vorrichtung nach Anspruch 1, **dadurch gekennzeichnet, dass** Saugleitung (17) so an die Förderleitung (15) angeschlossen ist, dass die Richtung der Strömung in der Förderleitung (15) und die Richtung der Strömung in der Saugleitung (17) einen Winkel bilden, der kleiner oder gleich 90° ist.

3. Vorrichtung nach Anspruch 1 oder 2, **dadurch gekennzeichnet, dass** sie am Anschluss der Saugleitung (17) an die Förderleitung (15) einen Venturi-Ejektor (23) umfasst.

4. Vorrichtung nach Anspruch 3, **dadurch gekennzeichnet, dass** der Venturi-Ejektor (23) eine Verengung (25) mit einem Durchmesser aufweist, der kleiner als der Durchmesser der Förderleitung (15) ist.

5. Vorrichtung nach Anspruch 4, **dadurch gekennzeichnet, dass** der Durchmesser der Verengung (25) zwischen dem 0,1- und dem 0,9-fachen des Durchmessers der Förderleitung (15) liegt.

6. Vorrichtung nach einem der Ansprüche 1 bis 5, **dadurch gekennzeichnet, dass** der Durchmesser der Saugleitung (17) kleiner als der Durchmesser der Förderleitung (15) ist.

7. Vorrichtung nach Anspruch 6, **dadurch gekennzeichnet, dass** der Durchmesser der Saugleitung (17) zwischen dem 0,1- und dem 0,9-fachen des Durchmessers der Förderleitung (15) liegt.

8. Vorrichtung nach einem der Ansprüche 1 bis 5, **dadurch gekennzeichnet, dass** sie ein Heizelement (29) umfasst, das zwischen der Pumpe (13) und dem Anschluss zwischen der Förderleitung (15) und der Saugleitung (17) angeordnet ist.

9. Vorrichtung nach einem der vorhergehenden Ansprüche, **dadurch gekennzeichnet, dass** die Saugleitung (17) eine Öffnung (20) im unteren Teil umfasst.

10. Vorrichtung nach einem der Ansprüche 1 bis 9, **dadurch gekennzeichnet, dass** die Luftströmung am Ausgang der Blasdüse (9) eine laminare Luftströmung ist.

11. Vorrichtung nach einem der Ansprüche 1 bis 10, **dadurch gekennzeichnet, dass** die Luftförderpumpe (13) einen Lufteinlass (19) im Inneren des Innenraumes eines Kraftfahrzeugs aufweist.

12. Rückblicksystem (1) für ein Kraftfahrzeug, das einen optischen Sensor (3) und eine Vorrichtung (5) nach einem der Ansprüche 1 bis 11 umfasst.

## Claims

1. A device (5) for protection of an optical sensor (3), comprising:
- at least one nozzle (9) for projection of air in front of the optical sensor (3), the projection nozzle (9) being disposed on one side of the optical sensor (3) and connected to an air discharge pump (13) via a discharge pipe (15) so that the air projected by the air projection nozzle (9) flows over the surface of the optical sensor (3), and
- at least one suction pipe (17) disposed on the opposite side of the optical sensor (3) relative to the projection nozzle (9), **characterized in that** the suction pipe (17) is connected to the discharge pipe (15) of the pump (13) downstream of the pump (13) so that the suction in the suction pipe (17) is produced by a Venturi effect.

2. The device as claimed in claim 1, **characterized in that** the suction pipe (17) is connected to the discharge pipe (15) so that the direction of the flow in the discharge pipe (15) and the direction of the flow in the suction pipe (17) make an angle less than or equal to 90°.

3. The device as claimed in claim 1 or 2, **characterized in that** it includes a Venturi effect ejector (23) at the level of the connection of the suction pipe (17) to the discharge pipe (15).

4. The device as claimed in claim 3, **characterized in that** the Venturi effect ejector (23) includes a constriction (25) of smaller diameter than the discharge pipe (15) .

5. The device as claimed in claim 4, **characterized in that** the diameter of the construction (25) is between 0.1 and 0.9 times inclusive the diameter of the discharge pipe (15).

6. The device as claimed in any one of claims 1 to 5, **characterized in that** the diameter of the suction pipe (17) is less than the diameter of the discharge pipe (15) .

7. The device as claimed in claim 6, **characterized in that** the diameter of the suction pipe (17) is between 0.1 and 0.9 times inclusive the diameter of the discharge pipe (15).

8. The device as claimed in any one of claims 1 to 5, **characterized in that** it includes a heating element (29) disposed between the pump (13) and the connection between the discharge pipe (15) and the suction pipe (17).

9. The device as claimed in any one of the preceding claims, **characterized in that** the suction pipe (17) includes an opening (20) in the bottom part.

10. The device as claimed in any one of claims 1 to 9, **characterized in that** the flow of air at the outlet of the projection nozzle (9) is a laminar flow of air.

11. The device as claimed in any one of claims 1 to 10, **characterized in that** the air discharge pump (13) includes an air intake (19) inside the passenger compartment of a motor vehicle.

12. A rear view system (1) for a motor vehicle, including an optical sensor (3) and a device (5) as claimed in any one of claims 1 to 11.
